# EUROPÄISCHE PATENTSCHRIFT

(11) **EP 1 286 141 B1**
(45) Veröffentlichungstag und Bekanntmachung des Hinweises auf die Patenterteilung: **13.10.2004**
(21) Anmeldenummer: 02100040.1
(22) Anmeldetag: 18.01.2002
(51) Int. Cl.: G01G 23/00

(54) **Programmierbare Vorrichtung mit einem gravimetrischen Messinstrument, Verfahren zum Programmieren einer solchen Vorrichtung und Software zum Durchführen des Verfahrens**
Programmable device with a gravimetric measuring instrument, method for programming such a device and software for carrying out the method
Dispositif programmable avec un instrument de mesure, méthode pour programmer ledit dispositif et logiciel pour la mise en oeuvre du procédé

(43) Veröffentlichungstag der Anmeldung: 26.02.2003
(73) Patentinhaber: Mettler-Toledo GmbH, 8606 Greifensee (CH)
(72) Erfinder: Gluvakov, Siegfried, 8608, Bubikon (CH)

(56) Entgegenhaltungen:
- WO-A-01/48702
- WO-A-01/63226
- US-A- 5 802 859
- "WAEGE-ELEKTRONIK GEHT INS NETZ" WDM: WAGEN DOSIEREN + MISCHEN, KEPPLER-KIRCHHEIM, MAINZ, DE, Bd. 32, Nr. 1, Februar 2001 (2001-02), Seite 25 XP000992086 ISSN: 1435-2176

## Beschreibung

Die Erfindung bezieht sich auf Vorrichtungen mit einem gravimetrischen Messinstrument. Insbesondere betroffen sind elektronische Waagen, die über einen Netzwerkanschluss mit einem Netzwerk und einem Computer verbunden werden können.

Normalerweise sind Waagen, wie sie in Forschung, Entwicklung oder Produktion eingesetzt werden, als eigenständige Geräte ausgeführt, die lediglich eine Spannungsversorgung brauchen, um eingesetzt werden zu können.

Neuerdings gibt es elektronische Waagen, die eine Netzwerk-Schnittstelle aufweisen und in einem Netzwerkverbund betrieben werden können. Üblicherweise ist die Waage für diesen Zweck mit einer einfachen RS-232-Schnittstelle ausgestattet. Die Möglichkeiten, die sich durch einen Netzwerkanschluss anbieten, sind bei weitem nicht ausgenutzt. Es werden jedoch momentan Anwendungen entwickelt, die vermehrt von dem Netzwerkanschluss Gebrauch machen. Auf diese Weise werden zum Beispiel Wagen von Ferne gewartet oder die Anzeige- und Bedieneinheit einer Waage wird auf einem an einem entfernten Ort platzierten Computerbildschirm abgebildet und die Waage von dort aus betrieben.

So lehrt etwa der Artikel"Wäge-Elektronik geht ins Netz" auf Seite 25 der Nummer 1/2001 der Zeitschrift"Wägen, dosieren + mischen" wie eine eichfähige Anbindung von Waagen über eine Wäge-Elektronik ans Netz über gängige Protokolle zu bewerkstelligen ist, wobei auf dem PC-Monitor ein Messfenster angezeigt wird.

Eine eingehende Beschreibung einer weiteren derartigen Anwendung gibt zum Beispiel die WO 01/48702 A1. Die Anwendung betrifft die Eingabe eines Wägewerts eines zu versendenden Pakets in die Versandanwendung in einer EDV, die einen oder mehrere Kunden-Einwahlknoten - ein Subsystem bestehend aus einer Waage und einem damit verbundenen PC - und einen damit kommunizierenden Dienstanbieter aufweist. Der Einwahlknoten benützt einen Browser um eine Website des Dienstanbieters aufzurufen und eine Aktivierungsroutine mit einem Skript in Gang zu setzen, wodurch die notwendigen Dienste und Treiber zum Einwahlknoten geladen werden, worauf das Paket gewogen und das Wägeresultat der Versandanwendung eingespeist werden kann. Es handelt sich jedoch um eine fest programmierte Anwendung mit einer mit einem vorbestimmten Zweck eingesetzten Waage.

Es ist eine Aufgabe der vorliegenden Erfindung, einen Ansatz anzubieten, der es erlaubt Waagen und andere Instrumente und Geräte mit mindestens einer Wägezelle flexibler einzusetzen.

Es ist eine weitere Aufgabe der Erfindung, Waagen und andere Instrumente und Geräte mit mindestens einer Wägezelle zu individualisieren, bzw. so zu betreiben, dass sie den momentanen Anforderungen eines Benutzers gerecht werden.

Diese Aufgaben werden erfindungsgemäss durch das System nach Anspruch 1, ein Verfahren nach Anspruch 14, eine Software nach Anspruch 22, eine Datenschnittstelle nach Anspruch 29 und ein programmierbares gravimetrisches Messinstrument nach Anspruch 30 gelöst.

Verschiedene vorteilhafte Ausführungsformen sind in den abhängigen Ansprüchen aufgeführt.

Es ist ein Vorteil der Erfindung, die Reproduzierbarkeit von Messabläufen bzw. Analyseverfahren verbessern zu können.

Es ist ein weiterer Vorteil der Erfindung, dass sich nicht nur Wägeaufgaben in Form von Verfahrensabläufen definieren, sondern auch komplette Lösungen realisieren lassen, die als Unterstützungswerkzeuge im Labor dienen und auch ein Bestandteil von Forschungs-, Entwicklungs- und Qualitätskontrollprozessen sein können.

Weitere Einzelheiten und Vorteile der Erfindung werden im Folgenden an Hand verschiedener Ausführungsbeispiele und mit Bezug auf die Zeichnungen, die einen integralen Bestandteil der Offenbarung der vorliegenden Erfindung bilden, ausführlich beschrieben. Hierbei zeigen gemäss Erfindung:
- Fig. 1: eine schematische Darstellung eines ersten Systems;
- Fig. 2: ein schematisches Flussdiagramm eines ersten Verfahrens;
- Fig. 3: eine schematische Darstellung einer Eingabemaske;
- Fig. 4: eine schematische Darstellung eines weiteren Systems;
- Fig. 5: eine schematische Darstellung eines weiteren Systems;
- Fig. 6: eine schematische Darstellung eines NetzwerkInterfaces, und
- Fig. 7: eine schematische Darstellung einer Waage.

Die Erfindung kann auf verschiedenste Messgeräte zur Massebestimmung, insbesondere auf Laborinstrumente mit mindestens einem gravimetrischen Messinstrument (z.B. in Form einer Wägezelle) angewendet werden. Dazu gehören unter anderem Trockner und Komparatoren, aber auch andere Instrumente, wie etwa Wägemodule in Produktionsstrassen. Der Einfachheit halber wird die Erfindung im Folgenden hauptsächlich im Zusammenhang mit elektronischen Waagen beschrieben, wobei dies nicht als Einschränkung zu verstehen ist.

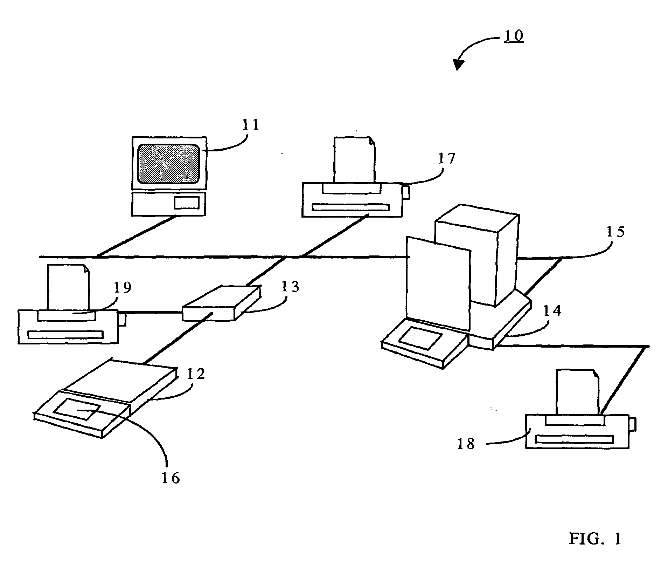

Eine erste Ausführungsform der Erfindung ist der schematischen Darstellung in Figur 1 zu entnehmen. Es ist ein System 10 gezeigt, das zwei elektronische Waagen 12 und 14 (z.B. Analysewaagen, Präzisionswaagen, Komparatorwaagen, Mikrowaagen, oder dergleichen) aufweist. Die Waage 12 ist über ein externes Netzwerk-Interface 13 mit einem Netzwerk 15 und einem Computer 11 verbunden. Die Waage 14 besitzt ein eingebautes Netzwerk-Interface (in Figur 1 nicht gezeigt), das ähnlich wie das Netzwerk-Interface 13 aufgebaut sein kann. Der Computer 11, die Waagen 12, 14, und die Netzwerk-Interfaces sind so ausgeführt, dass eine Kommunikationsverbindung zwischen den Waagen 12, 14 und dem Computer 11 aufbaubar ist. Auf dem Computer 11 ist eine Browseranwendung ausführbar. Zu diesem Zweck kann entweder ein Standardbrowser (z.B. Netscape Navigator oder Microsoft Internet Explorer) oder ein speziell installierter Browser verwendet werden. Das Netzwerk-Interface 13 ist so ausgeführt, dass es in der Lage ist, eine Befehlsanwendung bereit zu stellen. Diese Befehlsanwendung wird von dem Netzwerk-Interface 13 an den Computer 11 übertragen, bzw. vom Computer 11 her geladen, um auf dem Computer 11 mittels der Browseranwendung die Darstellung einer Eingabemaske zu bewirken. Die Eingabemaske ist so gestaltet und softwareseitig unterstützt, dass über den Computer 11 - zum Beispiel unter Benutzung der Computertastatur oder einer Computermaus (beides in Figur 1 nicht gezeigt) - ein Verfahrensablauf zur automatisierten Benutzung einer der Waagen 12 oder 14 definiert werden kann. Nachdem die Definition des Verfahrensablaufs abgeschlossen ist, kann der Verfahrensablauf durch den Computer 11 über das Netzwerk 15 und das Netzwerk-Interface 13 bereitgestellt werden. Dies geschieht so, dass der Verfahrensablauf durch die entsprechende Waage 12 oder 14 ausführbar ist. Es können verschiedene Peripheriegeräte mit dem System 10 verbunden sein. In Figur 1 sind drei Drucker 17, 18 und 19 Bestandteile des Systems 10. Der Drucker 17 ist ein Netzwerkdrucker, der direkt mit dem Netzwerk verbunden ist. Ein weiterer Drucker 18 ist an der Waage 14 angehängt und der Drucker 19 wird von dem Netzwerk-Interface 13 her angesteuert.

Eine weitere Ausführungsform der Erfindung ist im Folgenden ohne Bezugnahme auf eine der Figuren beschrieben. Es handelt sich um ein System, das mindestens eine Wägezelle aufweist. Das System ist über eine externe oder interne Datenschnittstelle mit einem Computer verbunden. Der Computer und das System sind so ausgeführt, dass eine Kommunikationsverbindung zwischen beiden aufbaubar ist. Auf dem Computer kann eine Browseranwendung ausgeführt werden. Es kommt eine Befehlsanwendung zum Einsatz. Diese Befehlsanwendung kann zum Beispiel von der Datenschnittstelle an den Computer übertragen, bzw. vom Computer her geladen werden. Auf dem Computer bewirkt die Browseranwendung die Darstellung einer Eingabemaske. Die Eingabemaske ist vorzugsweise so gestaltet und softwareseitig unterstützt, dass über den Computer ein Verfahrensablauf zur automatisierten Benutzung der Wägezelle definiert werden kann. Nachdem die Definition des Verfahrensablaufs abgeschlossen ist, kann der Verfahrensablauf durch den Computer bereitgestellt werden. Dies geschieht so, dass der Verfahrensablauf durch die Wägezelle ausführbar ist.

Unter dem Begriff Verfahrensablauf ist eine Darstellungsform zu verstehen, welche einen oder mehrere Verfahrensschritte bzw. Aktionen beschreibt, die durch eine elektronische Waage ausführbar sind. Es kommt dabei nicht darauf an, in welcher Sprache der Verfahrensablauf definiert ist. Der Verfahrensablauf kann zum Beispiel in einer Skriptform beschrieben sein, die dann vor dem Abarbeiten durch die Waage umgewandelt wird in eine Art Maschinensprache oder dergleichen.

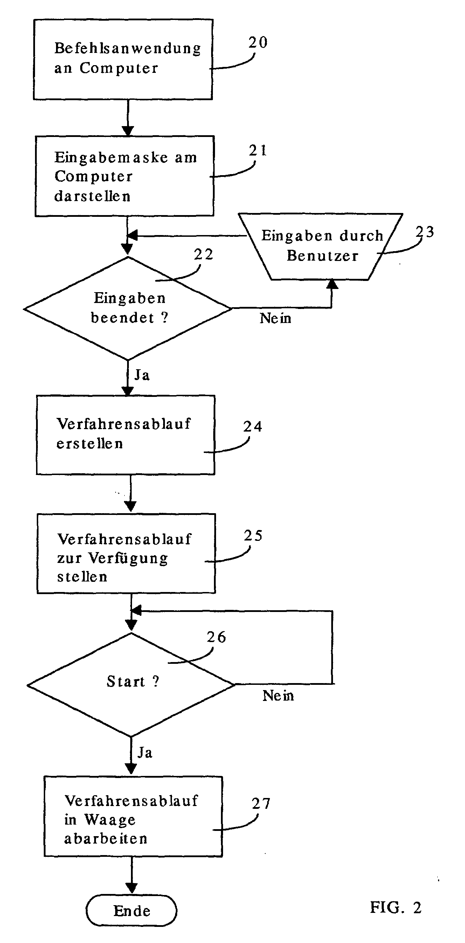

Gemäss Erfindung kann zum Beispiel ein Verfahren mit den unten angegebenen Verfahrensschritten ablaufen. Es ist das Ziel des Verfahrens einen Verfahrensablauf zur automatisierten Benutzung einer elektronischen, mit oder ohne Peripheriegeräte versehenen Waage 12 oder 14 zu definieren, die über ein externes bzw. internes Netzwerk-Interface und ein Netzwerk 15 mit einem Computer 11 in Kommunikationsverbindung stehen kann. Dabei werden unter anderem die folgenden Schritte ausgeführt, wie in dem Flussdiagramm in Figur 2 dargestellt:
Schritt 1 (Box 20): Übertragen einer Befehlsanwendung von dem Netzwerk-Interface 13 an den Computer 11. Die Befehlsanwendung ist waagenspezifisch, d.h., die Befehlsanwendung ist auf die Art und/oder den Typ der Waage speziell zugeschnitten. Dies ist empfehlenswert, da es verschiedene Arten/Typen von Waagen 12, 14 gibt, die sich durch unterschiedliche Spezifikationen auszeichnen. Es gibt zwei verschiedene Ansätze. Gemäss dem ersten Ansatz wird das Netzwerk-Interface 13 bzw. die Waage 14 mit eingebautem Netzwerk-Interface vom Computer 11 aus direkt angewählt. Dies kann zum Beispiel unter Verwendung einer Identifikationsnummer (ID), einer Adresse (z.B. eine IP Adresse), einem Domainnamen (z.B. innerhalb eines lokalen Netzwerkes), oder dergleichen geschehen, wobei jede Waage 12, 14, die über das Netzwerk 15 erreichbar ist, eine eigene ID, einen eigenen Domainnamen, bzw. eine eigene Adresse hat. Das Netzwerk-Interface 13 der angesprochenen Waage 12 oder 14 sendet darauf hin die Befehlsanwendung über das Netzwerk 15 zum Computer 11.
Schritt 2 (Box 21): Darstellen einer Eingabemaske auf dem Computer 11. Dies geschieht unter Zuhilfenahme der waagenspezifischen Befehlsanwendung. Vorzugsweise wird die Eingabemaske durch einen Browser verarbeitet, der auf dem Computer 11 installiert sein kann. Wenn es sich bei der Befehlsanwendung um ein Applet handelt, zum Beispiel ein sogenanntes JAVA Applet, dann muss der Browser in der Lage sein derartige Applets zu verarbeiten. Dazu braucht es je nach Browser zum Beispiel ein entsprechendes Plug-In. Es können aber auch andere Befehlsanwendungen eingesetzt werden, solange sichergestellt ist, dass eine Eingabemaske auf dem Bildschirm des Computers 11 dargestellt werden kann.
Schritt 3 (Boxen 22, 23, 24): Erstellen eines gewünschten Verfahrensablaufes mittels des Computers 11. Zu diesem Zweck kann der Benutzer Information (z.B. Daten oder Parameter) in die Eingabemaske an dem Computer 11 eingeben, oder in der Eingabemaske durch anklicken eine Auswahl treffen. Um dies zu ermöglichen, können in der Eingabemaske Schaltflächen (Radio-Buttons) oder Auswahllisten (z.B. Pull-Down Menüs) angeboten werden. In Figur 2 ist ein Flussdiagram gezeigt, bei dem der Verfahrensablauf erst erstellt wird (Box 24), nachdem die Eingabe durch die Eingabemaske abgeschlossen ist. Es ist jedoch auch möglich, während oder nach einer jeden Eingabe bzw. Auswahl die entsprechende(n) Zeile(n) des Verfahrensablaufs zu generieren. Beide Ausführungsformen dieser Alternative haben den Vorteil, dass man den entstehenden Verfahrensablauf in einem Fenster (z.B. in ASCII-Form) darstellen kann. So kann der Benutzer den im Entstehen begriffenen Verfahrensablauf jederzeit kontrollieren und gegebenenfalls korrigieren.
Schritt 4 (Box 24): Nachdem die Definition des Verfahrensablaufs abgeschlossen ist, kann der Verfahrensablauf über das Netzwerk 15 und das Netzwerk-Interface 13 bereit gestellt werden. Der Verfahrensablauf kann entweder in dem Netzwerk-Interface 13 oder in der Waage 12 oder 14 gespeichert werden, bevor er dann abgearbeitet wird. Der Verfahrensablauf kann zum Beispiel in Form eines Input-Files gespeichert werden. Er kann auch als Text Zeile für Zeile in einer Art Datenbank, eventuell in vorformatierter bzw. aufbereiteter Form, abgelegt werden.
Schritt 5 (Box 27): Automatisches Abarbeiten des erstellten Verfahrensablaufs in der Waage 12. Zu diesem Zweck umfasst die Waage eine Kontrollanwendung. Es wird nun, zum Beispiel nachdem durch ein Tastendruck an der Waage 12 ein Startbefehl gegeben wurde (Box 26), durch die Kontrollanwendung Schritt für Schritt der vordefinierte und gespeicherte Verfahrensablauf abgearbeitet. Die Kontrollanwendung kann auch an einem anderen Ort implementiert sein, insbesondere bei Fernbetrieb der Waage zum Beispiel im Computer, doch ist die Waage der dafür bevorzugte Ort. Es sei ausdrücklich erwähnt, dass das automatische Abarbeiten des vordefinierten und gespeicherten Verfahrensablaufs auch Schritte einschliessen kann, welche ein Tätigwerden von aussen, zum Beispiel durch eine Bedienperson oder einen Roboter verlangen. Die Benützung des Messinstruments erfolgt dadurch automatisiert, das heisst anweisungsgesteuert oder/und selbsttätig, also nicht ausschliesslich ohne jegliche Interaktion mit der Umwelt, obwohl dies der Fall sein kann.

Es ist offensichtlich, dass vor, während oder nach den angegebenen fünf Schritten zusätzliche Schritte ausgeführt werden können.

Die Befehlsanwendung gemäss Erfindung kann eine oder mehrere der folgenden Eigenschaften aufweisen:
- Unterstützung der Darstellung einer Eingabemaske auf dem Bildschirm eines Computers;
- Unterstützung der Erzeugung eines Verfahrenablaufs, vorzugsweise in Skriptform;
- Editieren und/oder Speichern und/oder Laden von Verfahrensabläufen von einem beliebigen Ort (z.B. einem durch ein Netzwerk getrennten Computer an einem anderen Ort);
- Starten und/oder Stoppen eines programmierten Verfahrensablaufs;
- Speichern und/oder Ausgeben (z.B. Darstellen) von gewonnenen Messdaten auf einem Computer;
- usw.

In einer weiteren Ausführungsform der Erfindung ist das Netzwerk 15 des Systems ein standardisierter Bus. In diesem Fall kann ein Standardkommunikationsprotokoll zur Kommunikation zwischen Netzwerk-Interface und Computer eingesetzt werden. Dies erleichtert die Umsetzung der Erfindung, da sowohl Standardbauteile (z.B. als Bus-Treiber), als auch Standardsoftware verwendet werden können. Vorzugsweise kommt ein Ethernet-Bus und ein IP-basiertes Protokoll zur Anwendung. Der Bus kann entweder durch Kabel, Glasfaser oder als drahtloser Bus ausgelegt sein. Gut geeignet ist zum Beispiel ein drahtloser Bluetooth-Kommunikationsansatz.

Vorzugsweise umfasst das Netzwerk-Interface 13 eine webserverähnliche Anwendung, die auf Anforderung durch den Computer 11 die Befehlsanwendung bereit stellen kann, in gleicher Art, wie dies bei einer Client-Server Verbindung im Web erfolgt. Diese Web-Anwendung kann zum Beispiel so ausgelegt sein, dass sich mittels eines URL (uniform resource locator) das Netzwerk-Interface 13 vom Computer 11 aus ansprechen lässt.

Die vorliegende Erfindung ist besonders gut geeignet, um durch den Verfahrensablauf einen Messablauf oder Analysevorgang zu definieren, der auf der Waage durchzuführen ist. Dabei kann es sich zum Beispiel um einen interaktiven Ablauf handeln, bei dem der Messablauf nach Drücken einer Start-Taste beginnt. Am Display 16 der Waage 12 kann jeweils ein begleitender Text oder ein Piktogramm (z.B. unterstützt mit akustischen und/oder optischen Signalen) angezeigt werden. So kann zum Beispiel der Benutzer per Textanzeige aufgefordert werden, die zu wiegende Substanz auf die Waage zu legen.

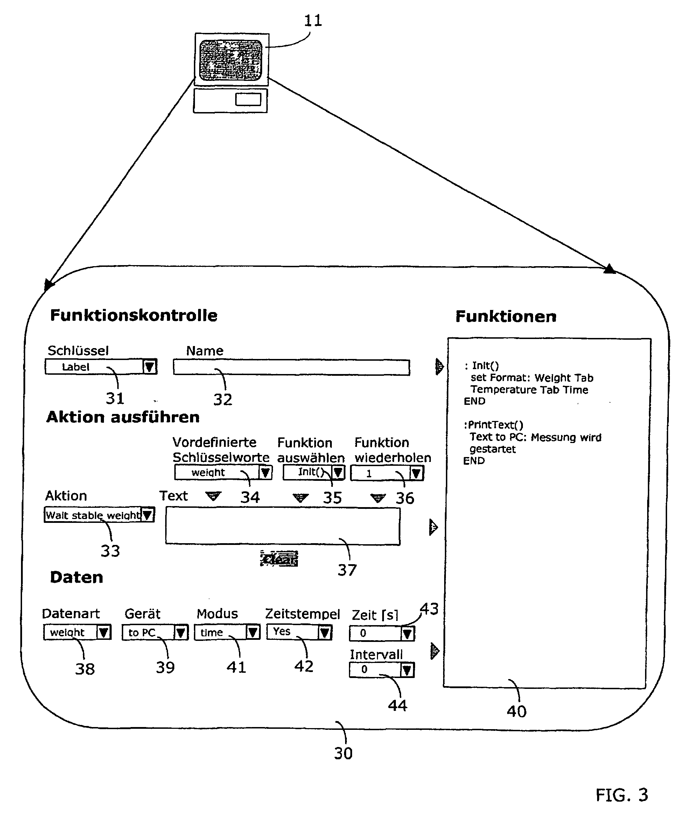

Gemäss einer speziellen Ausführungsform der Erfindung wird der Verfahrensablauf durch eine Programmiersprache, in welcher der Programmcode selbsterklärend ist, vorzugsweise in einer für den Benutzer lesbaren Skriptform, beschrieben. In Figur 3 ist das Beispiel einer Eingabemaske 30 gezeigt, die auf dem Bildschirm eines Computers 11 angezeigt wird. Um das Erstellen des Verfahrensablaufs zu unterstützen, werden in dem gezeigten Beispiel verschiedene Werkzeuge in Form von Auswahllisten 31, 33, 34, 35, 36, 38, 39, 41, 42, 43, 44 mit Listenschaltflächen (als Rechtecke und Dreiecke gezeigt) und Eingabe- und/oder Anzeigefenstern 32, 37, 40 angeboten. In dem Anzeigefenster 40 auf der rechten Seite der Eingabemaske 30 wird der im Entstehen begriffene Verfahrensablauf gezeigt. Unter der Rubrik "Funktionskontrolle" kann der Benutzer eigene Funktionen definieren. Er kann zum Beispiel in der Auswahlliste 31 ein Merkmal "Label" auswählen und dann im Eingabefenster 32 einen Namen für die Funktion vorgeben. Die auszuführende Funktion kann in der Rubrik "Aktion ausführen" definiert werden. Auch hierzu werden bereits vorhandene Funktionen in einer Auswahlliste 33 angeboten. Diese bereits vorhandenen Funktionen können als Bausteine dienen. Der Benutzer kann auch direkt im Anzeige- und Eingabefenster 37 eine Aktion definieren. Hilfsweise kann er mit den drei Auswahllisten 34, 35 und 36 aus einem Angebot vorgegebener Schlüsselworte und Funktionen eine Aktion festlegen. Wie oft eine Aktion zu wiederholen ist wird durch das Anwählen einer entsprechenden Zahl in der Auswahlliste 36 festgelegt. So lassen sich Schleifen programmieren, die mehrfach zu durchlaufen sind. In der Rubrik "Daten" kann zum Beispiel das Datenformat oder die Datenausgabe festgelegt werden. Auch hier sind verschiedene Auswahllisten 38, 39, 41 - 44 vorgegeben, um den Benutzer bei der Handhabung zu unterstützen.

Es können gemäss Erfindung zum Beispiel folgenden Daten ermittelt und ausgegeben werden: absolutes Gewicht, relatives Gewicht, Temperatur, Temperaturdifferenz, Zeit, Datum, Druck, Luftfeuchtigkeit, usw. Welche dieser Daten effektiv zur Verfügung stehen hängt selbstverständlich von der Art und Ausstattung der verwendeten Waage und der verwendeten Befehlsanwendung ab.

Es ist auch denkbar das System so auszubauen, dass es möglich ist, direkt im Anzeigefenster 40 zu editieren, das damit zum Anzeige- und Eingabefenster wird. Hierzu bedarf es jedoch gewisser Kenntnisse was die Syntax der verwendeten Programmiersprache angeht. Um Fehler zu vermeiden kann ein Debugger angeboten werden, der den einmal festgelegten Verfahrensablauf untersucht, um Programmierfehler zu erkennen und diese anzuzeigen.

Mit einer Eingabemaske 30, wie zum Beispiel in Figur 3 dargestellt, ist eine benutzerfreundliche Definition des Verfahrensablaufs möglich. Der Benutzer braucht nur wenige Grundkenntnisse, um über den Computer zum Beispiel einen Messablauf für eine elektronische Waage zu programmieren.

Vorzugsweise können Templates (Standardskripts) als eine Art Muster vorgegeben werden. Der Benutzer kann dann ein geeignetes Template in den Computer laden und in dem Fenster 40 der Eingabemaske anzeigen lassen. Wenn das Template seinen Vorstellungen entspricht, kann er es über das Netzwerk an die Waage übermitteln. Andernfalls kann der Benutzer Änderungen im Verfahrensablauf vornehmen, bevor er ihn dann der Waage übergibt.

In einer anderen Ausführungsform ist das Netzwerk-Interface als relativ einfaches und kostengünstiges Gerät ausgelegt, das lediglich die notwendige Hardware für die Kommunikation mit dem Computer und der Waage (z.B. über eine RS-232 Schnittstelle) aufweist. Zusätzlich enthält das Netzwerk-Interface die Befehlsanwendung.

Gemäss einer weiteren Ausführungsform der Erfindung lässt sich der Verfahrensablauf aus einzelnen Modulen (Subprozessen) aufbauen. Im Folgenden sind einige Beispiele derartiger Module gegeben. Diese Auflistung ist ohne Anspruch auf Vollständigkeit und dient lediglich der Erläuterung:
- Türe auf (die Türe der Waage wird automatisch geöffnet);
- Waage beladen (es erfolgt die Aufforderung, zum Beispiel per Textanzeige, die Waage zu beladen);
- "Wait stable weight" (dies ist eine Routine, die abwartet, bis die Waage sich in Ruhe befindet);
- Windabweiser öffnen oder schliessen;
- Lift anheben oder absenken;
- Text anzeigen;
- Anzeige löschen;
- Text auf Drucker ausgeben;
- Text an Computer übergeben;
- Dialog eröffnen;
- Datenformat definieren;
- usw.

Wenn die Waage eine grafikfähige Anzeige hat, kann der Benutzer zum Beispiel vorhandene Verfahrensabläufe personalisieren, indem er ein Firmenlogo, den Namen des gegenwärtigen Benutzers, benutzerspezifische Definitionen oder dergleichen einbindet, damit diese dann auf der entsprechenden Waage angezeigt werden können.

Die Erfindung bietet nicht nur die Möglichkeit den Ablauf eines Verfahrens (z.B. ein Messverfahren) vorzugeben. Es lassen sich auch andere Anwendungen definieren, die zum Beispiel parallel zu einem Messablauf in der Waage ablaufen. Eine Möglichkeit ist das Festlegen einer Überwachungsfunktion (Reporting-Funktion), die gewisse Werte an den Computer übermittelt und/oder die Werte mit Zeitstempel versehen abspeichert und/oder die Werte ausdruckt.

Die Ausführung eines ausgewählten Verfahrensablaufs wird durch die Kontrollanwendung ermöglicht, die vorzugsweise in der Waage implementiert ist. Die Kontrollanwendung wird üblicherweise so ausgelegt werden, dass sie einen übertragenen Verfahrensablauf im Speicher ablegt, bevor der Verfahrensablauf von dort entnommen und abgearbeitet wird. In einem Speicher in der Waage können auch einige wenige Verfahrensabläufe fest abgelegt sein, zum Beispiel zu Demonstrationszwecken. Die Kontrollanwendung kann die einzelnen Zeilen des festgelegten Verfahrensablaufs aus einem Speicher lesen und abarbeiten. Es kann zum Beispiel eine Art Interpreter als Kontrollanwendung eingesetzt werden.

Die Kontrollanwendung kann wie einer Art Abspielgerät realisiert sein, das nach dem Auslösen eines Startknopfes an der Waage (oder am Computer), Schritt für Schritt den Verfahrensablauf ausführt. Es können auch zusätzlich zu dem Startknopf weitere Bedienungselemente (zum Beispiel eine Pausen-Taste) vorgesehen sein.

Die Kontrollanwendung kann so aufgebaut sein, dass es möglich ist Messwerte zu erfassen, die durch die Waage ermittelt wurden, und/oder Messwerte an den Computer zu übermitteln, und/oder ein Peripheriegerät (z.B. einen Drucker oder ein Thermometer) anzusteuern.

Die Kontrollanwendung gemäss Erfindung kann eine oder mehrere der folgenden Eigenschaften aufweisen:
Speichern des Verfahrensablaufs;
Ausführen des Verfahrensablaufs;
Erfassen von Messwerten;
Übertragen von ermittelten Messwerten von der Waage an einen Computer oder ein Peripheriegerät, das entweder über das Netzwerk oder direkt von der Waage aus erreichbar ist;
Steuern von Peripheriegeräten der Waage;
usw.

In einer weiteren erfindungsgemässen Ausführungsform kann die Waage vom Computer aus gestartet oder gestoppt werden. Vorzugsweise wird das durch die Befehlsanwendung realisiert, die über das Netzwerk und das Netzwerk-Interface mit der Waage in Kommunikationsverbindung steht.

Vorzugsweise sind die Kontrollanwendung und die Befehlsanwendung aufeinander abgestimmt, um eine einwandfreie Funktion zu gewährleisten. Auch kann bei einer guten Abstimmung, zum Beispiel bei Verwendung einer genau auf die Waage bezogenen, waagenspezifischen Befehlsanwendung, die gesamte Funktionalität einer Waage ausgenützt werden.

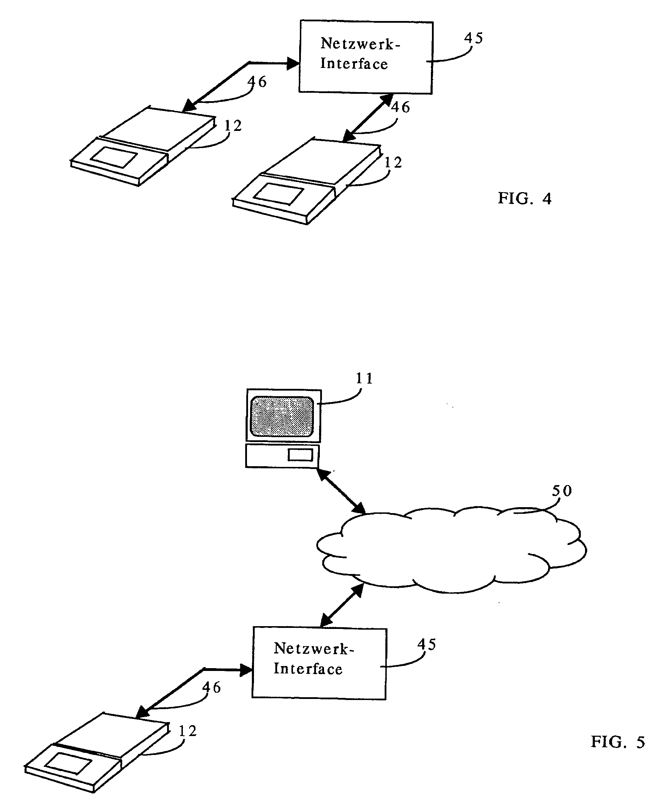

Wie in Figur 4 gezeigt können über ein Netzwerk-Interface 45 mehrere Waagen 12 angeschlossen werden. Zu diesem Zweck kann das Netzwerk-Interface 45 zum Beispiel mit zwei RS-232 Buchsen ausgestattet sein, um den Aufbau von RS-232 Verbindungen 46 zwischen den Waagen 12 und dem Netzwerk-Interface 45 zu ermöglichen.

Ein Netzwerk-Interface gemäss Erfindung kann neben der oder den Schnittstellen zu der oder den Waagen auch eine oder mehrere Schnittstellen zu Peripheriegeräten aufweisen. So lassen sich zum Beispiel ohne weiteres die folgenden Peripheriegeräte mit einer Waage verknüpfen: Drucker, Temperatur- und/oder Druckmessgerät, Bar-Code-Leser, Roboter, automatisierte Laborgeräte, Wägelift, Relais, usw.

In einer weiteren Ausführungsform kann eine Waage 12 über das Netzwerk-Interface 45 mit einem grossen Netzwerk 50, z.B. dem Internet, verbunden sein, wie stark schematisiert in Figur 5 gezeigt. An einer anderen Stelle des grossen Netzwerkes 50 ist dann ein Computer 11 angeschlossen. Bei einer solchen Konfiguration ist es wichtig Sicherheitsaspekte zu berücksichtigen, um zu verhindern, dass unautorisierte Personen die Waage 12 ansteuern bzw. die Programmierung der Waage 12 manipulieren. Es können bekannte Lösungen eingesetzt werden, um die notwendige Sicherheit garantieren zu können.

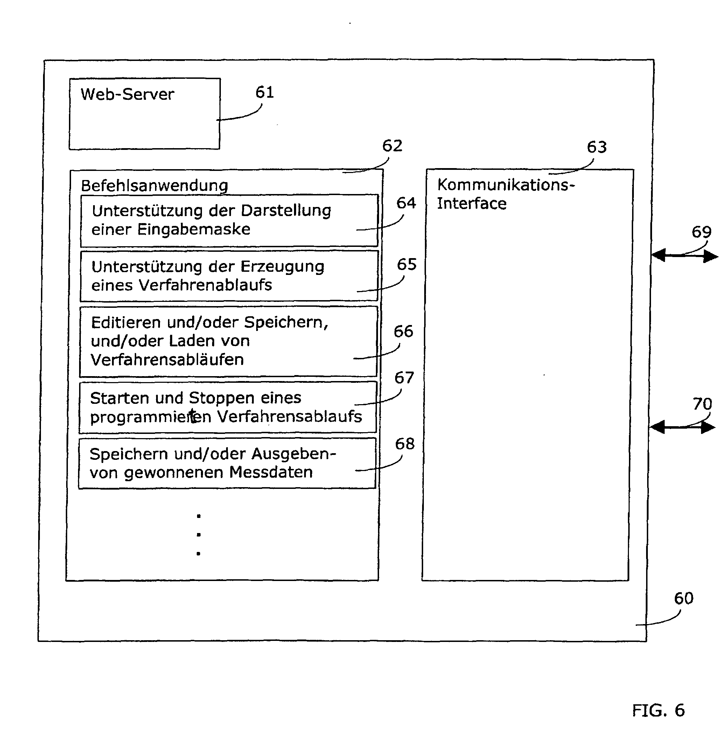

Das Beispiel eines Netzwerk-Interfaces 60 mit den verschiedenen Softwaremodulen 61, 62 und 63 ist schematisch in Figur 6 gezeigt. Es ist zu beachten, dass in Figur 6 nicht die Hardware, sondern lediglich die Softwaremodule gezeigt sind. Damit das Netzwerk-Interface 60 von einem entfernten Computer aus angesprochen werden kann, besitzt es eine Art Web-Server 61. Über den Web-Server 61 kann zum Beispiel die Befehlsanwendung 62 zum Computer hinaufgeladen werden. In dem gezeigten Beispiel umfasst die Befehlsanwendung 62 mehrere Bausteine 64 - 68. Jeder dieser Bausteine unterstützt eine bestimmte Funktionalität. Durch den Baustein 64 wird der Browser im Computer beim Erzeugen der Eingabemaske unterstützt. Der Baustein 65 unterstützt den Computer beim Erzeugen des Verfahrensablaufs und der Baustein 66 ermöglicht zum Beispiel das Editieren und/oder Speichern und/oder Laden von Verfahrensabläufen. Durch den Baustein 67 kann man einen Verfahrensablauf starten oder stoppen. Zum Speichern und/oder Ausgeben der gewonnenen Messdaten kann der Baustein 68 zur Anwendung kommen. Die Befehlsanwendung 62 kann durch weitere Bausteine ergänzt werden, wie durch die Punkte in Figur 6 angedeutet. Als drittes Softwaremodul weist das Netzwerk-Interface 60 eine Software auf, die als Kommunikations-Interface 63 dient. Durch dieses Interface 63 werden die wesentlichen Abläufe beim Aufbauen und Abbauen, sowie beim Verwenden einer Kommunikationsverbindung gehandhabt. Das Netzwerk-Interface 60 hat eine erste Verbindung 70 zu einer Waage und eine zweite Verbindung 69 zu einem Netzwerk. Nicht alle Bausteine 64 - 68 müssen vorhanden sein. Es können auch weniger Bausteine oder/und andere Bausteine vorgesehen werden.

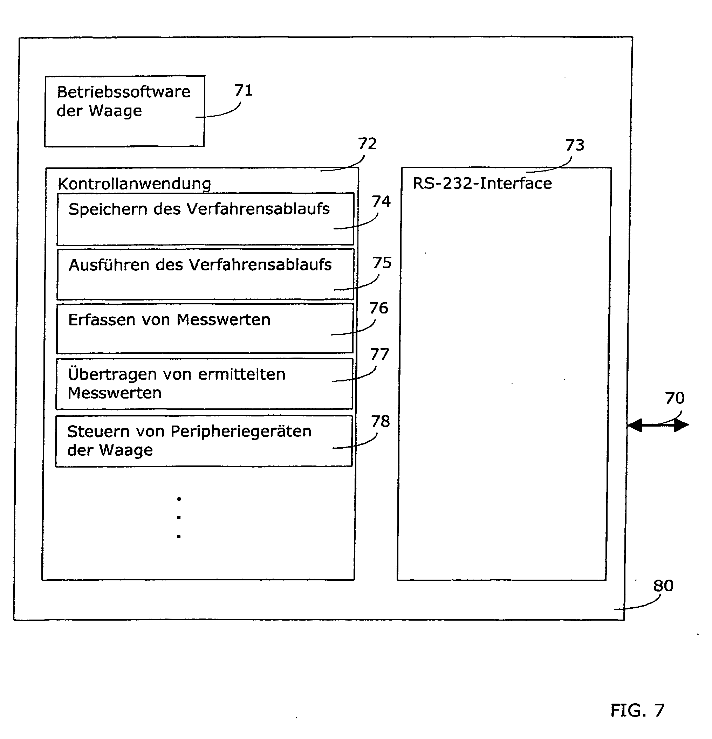

Das Beispiel einer Waage 80 ist in Figur 7 gezeigt, wobei jedoch nur die wesentlichen Software Module 71, 72 und 73 dargestellt sind. Die meisten elektronischen Waagen 80 umfassen eine Betriebssoftware 71, um die eigentlichen Abläufe innerhalb der Waage 80 zu steuern und zu kontrollieren. Zusätzlich weist die Waage 80 eine Schnittstelle zu einem Netzwerk-Interface auf. Die Schnittstelle wird durch eine RS-232-Interface Software 73 unterstützt. Die RS-232 Verbindung zu dem Netzwerk-Interface ist als Doppelpfeil 70 angedeutet. Gemäss Erfindung umfasst die Waage 80 auch eine Kontrollanwendung 72. Die Kontrollanwendung hat in dem gezeigten Bespiel mehrere Bausteine 74 - 78 und kann bei Bedarf erweitert werden. Der erste Baustein 74 ist für das Abspeichern des Verfahrensablaufs ausgelegt. Die Ausführung des Verfahrensablaufs erfolgt mit Unterstützung des zweiten Bausteins 75 während der Baustein 76 die Messwerte erfasst. Falls gewünscht, werden die ermittelten Messwerte durch den Baustein 77 zum Beispiel an einen entfernten Computer übertragen. Falls die Waage 80 mit Peripheriegeräten ausgestattet oder verbunden ist, kann der Baustein 78 zum Einsatz kommen. Nicht alle Bausteine 74 - 78 müssen vorhanden sein. Es können auch weniger oder/und andere Bausteine vorgesehen werden.

Es ist ein Vorteil der Erfindung, dass der Benutzer oder Kunde eigene Wäge- oder Analyseapplikationen definieren kann. Man kann gemäss Erfindung zum Beispiel eigene Messstandards definieren.

Der Benutzer oder Kunde kann seine Applikationen ohne spezielle Programmierkenntnisse erstellen. Vorgespeicherte (Teil-)Applikationen können als Module für die Erstellung einer neuen Applikation wieder verwendet werden. Es können zum Beispiel über einen Netzwerk-Server verschiedene Applikation zur späteren Verwendung angeboten werden.

Ein weiterer Vorteil besteht darin, dass Messwerte von der Waage an einen beliebigen Ort im Netzwerk übermittelt werden können. So kann zum Beispiel das Ergebnis einer Analyse an den Computer am Büroarbeitsplatz eines Laboranten übermittelt werden. Dort können die Ergebnisse dann weiter verarbeitet werden.

Auch können Messungen von einem beliebigen Ort aus überwacht werden. Diese Funktion kann zum Beispiel für Schulungen eingesetzt werden.

Applikationen in einer Waage gemäss Erfindung sind dynamisch, da sie von aussen durch die zugeladenen Verfahrensabläufe gesteuert werden.

Beliebige Kombinationen der gezeigten und/oder beschriebenen Ausführungsformen gehören zum Umfang der vorliegenden Erfindung, wie sie durch die folgenden Ansprüchen definiert sind, auch wenn diese Kombinationen nicht explizit dargestellt sind. Die Bezugszeichen in allen Figuren bezeichnen jeweils dieselben Elemente, auch wenn diese im Einzelnen nicht immer erläutert sind.

## Patentansprüche

1. System (10) mit mindestens einem gravimetrischen Messinstrument (12,14), mindestens einer Datenschnittstelle (13; 45; 60) und einem mit einem Bildschirm versehenen Computer (11), wobei
a. das Messinstrument (12, 14; 80) über die Datenschnittstelle (13; 45; 60) mit dem Computer (11) verbindbar und eine Kommunikationsverbindung zwischen dem Messinstrument (12, 14; 80) und dem Computer (11) aufbaubar ist,
b. auf dem Computer (11) eine Browseranwendung ausführbar ist,
c. eine Befehlsanwendung (62) auf dem Bildschirm des Computers (11) die Darstellung einer Eingabemaske (30) bewirkt,
d. über die Eingabemaske (30) am Computer (11) ein Verfahrensablauf zur automatisierten Benutzung des Messinstruments (12, 14; 80) definierbar ist,
e. der Verfahrensablauf durch den Computer (11) bereitstellbar ist, und
f. der Verfahrensablauf durch das Messinstrument (12, 14; 80) ausführbar ist.

2. System (10) nach Anspruch 1, mit einem Netzwerk (15; 50), wobei die Datenschnittstelle als Netzwerk-Interface (13; 45; 60) ausgelegt ist, wobei
a. das Messinstrument (12, 14; 80) über das Netzwerk-Interface (13; 45; 60) und das Netzwerk (15; 50) mit dem Computer (11) verbindbar ist, um die Kommunikationsverbindung zwischen dem Messinstrurnent (12, 14; 80) und dem Computer (11) bereit zu stellen,
b. die Befehlsanwendung durch das Netzwerk-Interface (13; 45; 60) oder über das Netzwerk-Interface (13; 45; 60) bereitstellbar ist, und
c. der Verfahrensablauf durch den Computer (11) über das Netzwerk (15; 50) und das Netzwerk-Interface (13; 45; 60) bereitstellbar ist.

3. System (10) nach Anspruch 1 oder 2, wobei zur Kommunikation mit dem Computer (11) ein Standard Kommunikationsprotokoll, vorzugsweise ein IP-basiertes Protokoll, verwendbar ist.

4. System (10) nach Anspruch 1, 2 oder 3, wobei die Befehlsanwendung (62) als Applikation oder als Applet ausgebildet ist.

5. System (10) nach Anspruch 2, wobei das Netzwerk-Interface (13; 45; 60) eine Web-Anwendung (61) enthält, um auf Anforderung durch den Computer (11) die Befehlsanwendung (62) bereit zu stellen.

6. System (10) nach einem der vorhergehenden Ansprüche, wobei der Verfahrensablauf einen Messablauf definiert, der auf dem Messinstrument (12, 14; 80) durchführbar ist.

7. System (10) nach einem der vorhergehenden Ansprüche, wobei der Verfahrensablauf durch eine selbsterklärende Programmiersprache, vorzugsweise in für Benutzer lesbarer Skriptform, beschreibbar ist.

8. System (10) nach einem der Ansprüche 1 - 7, wobei für die Definition des Verfahrensablaufs in der Eingabemaske (30) mehrere Auswahllisten, die Merkmale, Funktionen, Formate oder Daten enthalten, und/oder ein Eingabefeld, in dem sich direkt Aktionen definieren lassen, zur Verfügung stehen.

9. System (10) nach einem der vorhergehenden Ansprüche, wobei in dem Messinstrument (12, 14; 80) eine Kontrollanwendung (72) gegeben ist, durch welche die Ausführung des Verfahrensablaufs durch das Messinstrument (12, 14; 80) kontrollierbar ist.

10. System (10) nach Anspruch 9, wobei die Kontrollanwendung (72) es ermöglicht
- Messwerte zu erfassen, die durch das Messinstrument (12, 14; 80) ermittelt wurden, und/oder
- Messwerte an den Computer (11) zu übermitteln, und/oder
- ein Peripheriegerät oder mehrere Peripheriegeräte anzusteuern.

11. System (10) nach einem der Ansprüche 2 bis 10, wobei die Befehlsanwendung (62) über das Netzwerk (15; 50) ein Starten und/oder Stoppen des Verfahrensablaufs ermöglicht.

12. System (10) nach einem der vorhergehenden Ansprüche, wobei es sich bei dem Messinstrument (12, 14; 80) um eine Wägezelle handelt.

13. System (10) nach Anspruch 12, wobei die Wägezelle Bestandteil einer Waage, eines Trockners, eines Komparators, oder eines anderen Instruments ist.

14. Verfahren zum Festlegen und Abarbeiten eines Verfahrensablaufs zur automatisierten Benutzung mindestens eines gravimetrischen Messinstruments (12, 14; 80), das über eine Datenschnittstelle (13; 45; 60) mit einem Computer (11) in Kommunikationsverbindung stehen kann, mit den folgenden Schritten:
a. Übertragen einer Befehlsanwendung (62) an den Computer (11), wobei die Befehlsanwendung (62) messinstrumentspezifisch ist,
b. Darstellen einer Eingabemaske (30) auf dem Computer (11) unter Zuhilfenahme der Befehlsanwendung (62),
c. Erstellen des Verfahrensablaufes mittels des Computers (11) in Abhängigkeit von Eingaben, die durch die Eingabemaske (30) getätigt werden,
d. Bereitstellen des erstellten Verfahrensablaufs über die Datenschnittstelle (13; 45; 60),
e. automatisches Abarbeiten des erstellten Verfahrensablaufs in dem Messinstrument (12, 14; 80).

15. Verfahren nach Anspruch 14, wobei die Kommunikationsverbindung über ein Netzwerk (15; 50) verläuft, und wobei das Übertragen der Befehlsanwendung (62) an den Computer (11) und das Bereitstellen des erstellten Verfahrensablaufs über das Netzwerk (15; 50) erfolgt.

16. Verfahren nach Anspruch 15, wobei vor dem Ausführen des Schritts a der Computer (11) das Messinstrument (12, 14; 80) durch das Netzwerk (15; 50) hindurch unter Zuhilfenahme einer Identifikation, vorzugsweise einer IP-Adresse, eines Domainnamens, oder eines ID-Codes, anspricht.

17. Verfahren nach Anspruch 15 oder 16, wobei ein Netzwerk-Interface (13; 45; 60) vorhanden ist und der erstellte Verfahrensablauf vor dem automatischen Abarbeiten in einer internen Datenbank des Netzwerk-Interfaces (13; 45; 60) abgelegt wird.

18. Verfahren nach einem der Ansprüche 14 bis 17, wobei Messwerte, die während des automatischen Abarbeitens ermittelt wurden, zur weiteren Verwendung bereit gestellt werden.

19. Verfahren nach einem der Ansprüche 14 bis 18, wobei während des automatischen Abarbeitens eine Berichts- oder Überwachungsfunktion auf dem Messinstrument (12, 14; 80) abläuft, um Information an den Computer (11) zu übermitteln.

20. Verfahren nach einem der Ansprüche 14 bis 19, wobei es sich bei dem Messinstrument (12, 14; 80) um eine Wägezelle handelt.

21. Verfahren nach Anspruch 20, wobei die Wägezelle Bestandteil einer Waage, eines Trockners, eines Komparators, oder eines anderen Instruments ist.

22. Software (62) zur Verwendung in einem System (10) mit mindestens einem gravimetrischen Messinstrument (12, 14; 80), mindestens einer Datenschnittstelle (13; 45; 60) und A einem Computer (11), wobei das Messinstrument (12, 14; 80) über die Schnittstelle (13; 45; 60) mit dem Computer (11) in Kommunikationsverbindung stehen kann und die Software dazu ausgelegt ist auf dem Computer (11) die folgenden Schritte auszuführen:
- Unterstützung der Darstellung einer Eingabemaske auf einem Bildschirm, der an den Computer (11) angeschlossen ist;
- Unterstützung der Erzeugung eines Verfahrenablaufs, vorzugsweise in Skriptform;
- Editieren und/oder Speichern und/oder Laden von Verfahrensabläufen.

23. Software (62) nach Anspruch 22, wobei die Datenschnittstelle als Netzwerk-Interface (13; 45; 60) ausgelegt ist, das System ein Netzwerk (15; 50) umfasst und die Kommunikationsverbindung zwischen dem Computer (11) und dem Messinstrument (12, 14; 80) über das Netzwerk-Interface (13; 45; 60) und das Netzwerk (15; 50) verläuft.

24. Software (62) nach Anspruch 22 oder 23, wobei einer oder mehrere der folgenden Schritte ausführbar sind:
- Starten und/oder Stoppen eines programmierten Verfahrensablaufs;
- Speichern und/oder Ausgeben von gewonnen Messdaten auf dem Computer.

25. Software (62) nach Anspruch 22, 23 oder 24, wobei es sich um eine Applikation oder ein Applet handelt.

26. Software (62) nach einem der Ansprüche 22 bis 25, wobei es sich bei dem Messinstrument (12, 14; 80) um eine Wägezelle handelt.

27. Software (62) nach Anspruch 26, wobei die Wägezelle Bestandteil einer Waage, eines Trockners, eines Komparators, oder eines anderen Instruments ist.

28. Software (62) nach einem der Ansprüche 22 bis 26, wobei zusätzlich einer oder mehrere der folgenden Schritte ausführbar sind:
- Übertragen von ermittelten Messwerten vom Messinstrument (12, 14; 80) an einen Computer (11) oder an ein Peripheriegerät;
- Steuern von Peripheriegeräten des Messinstruments (12, 14; 80).

29. Datenschnittstelle (13; 45; 60) in einem System nach Anspruch 1, wobei eine Software (62, 72) nach Anspruch 22 zumindest teilweise in der Datenschnittstelle abgelegt ist.

30. Programmierbares gravimetrisches Messinstrument (12, 14; 80) in einem System nach Anspruch 1, wobei eine Software (62, 72) nach Anspruch 22 ganz oder teilweise im Messinstrument und/oder einer Datenschnittstelle (13; 45; 60) nach Anspruch 29 abgelegt ist.

## Claims

1. System (10) with at least one gravimetric measuring instrument (12,14), at least one data interface (13; 45; 60), and a computer equipped with a display (11), wherein
a. the measuring instrument (12, 14; 80) can be connected via the data interface (13; 45; 60) to the computer (11), and between the measuring instrument (12, 14; 80) and the computer (11) a communication connection can be established;
b. on the computer (11) a browser application can be executed;
c. a command application (62) on the display of the computer (11) causes representation of an input mask (30);
d. via the input mask (30) on the computer (11) a program for automated use of the measuring instrument (12, 14; 80) can be defined;
e. the program can be made available by the computer (11); and
f. the program can be executed by the measuring instrument (12, 14; 80).

2. System (10) according to Claim 1 with a network (15; 50), the data interface being designed as network interface (13; 45; 60), wherein
a. the measuring instrument (12, 14; 80) can be connected via the network interface (13; 45; 60) and the network (15; 50) to the computer (11), to make available the communication connection between the measuring instrument (12, 14; 80) and the computer (11);
b. the command application can be made available by the network interface (13; 45; 60) or via the network interface (13; 45; 60); and
c. the program can be made available by the computer (11) via the network (15; 50) and the network interface (13; 45; 60).

3. System (10) according to Claim 1 or 2, wherein for communication with the computer (11) a standard communication protocol, preferably an IP-based protocol, can be used.

4. System (10) according to Claim 1, 2, or 3, wherein the command application (62) is realized as an application or as an applet.

5. System (10) according to Claim 2, wherein the network interface (13; 45; 60) contains a web application, in order to make the command application (62) available on request from the computer (11).

6. System (10) according to one of the foregoing claims, wherein the program defines a measurement procedure which can be executed on the measuring instrument (12, 14; 80).

7. System (10) according to one of the foregoing claims, wherein the program can be described in a self-explanatory programming language, preferably in a form of script which is readable for users.

8. System (10) according to one of Claims 1 - 7, wherein for the definition of the program in the input mask (30) several selection lists containing features, functions, formats or data, and/or an input window in which actions can be defined directly are available.

9. System (10) according to one of the foregoing claims, wherein in the measuring instrument (12, 14; 80) there is a control application (72), by means of which the execution of the program by the measuring instrument (12, 14; 80) can be controlled.

10. System (10) according to Claim 9, wherein the control application (72) makes it possible to
- record measurement values which have been determined by the measuring instrument (12, 14; 80); and/or
- transmit measurement values to the computer (11); and/or
- control a peripheral device or several peripheral devices.

11. System (10) according to one of Claims 2 to 10, wherein the command application (62) makes starting and/or stopping of the program via the network (15; 50) possible.

12. System (10) according to one of the foregoing claims, wherein the measuring instrument (12, 14; 80) is a weighing cell.

13. System (10) according to Claim 12, wherein the weighing cell is a component of a balance or scale, a dryer, a comparator, or another instrument.

14. Method of specifying and executing step-by-step a program for automated use of at least one gravimetric measuring instrument (12, 14; 80), which is, for defining the program, in communication connection with a computer (11) via a data interface (13; 45; 60), with the following steps:
a. Transmission to the computer (11) of a command application (62), the command application being specific to the measuring instrument;
b. Representation with the aid of the command application (62) of an input mask (30) on the computer (11);
c. Creation of the program by means of the computer (11), depending on inputs which are made through the input mask (30);
d. Making the created program available via the data interface (13; 45; 60);
e. Automatic step-by-step execution in the measuring instrument (12, 14; 80) of the created program.

15. Method according to Claim 14, wherein the communication connection is via a network (15, 50), and wherein the command application (62) is transmitted to the computer (11), and the created program made available, via the network (15; 50).

16. Method according to Claim 15 wherein, before execution of step a, the computer (11) addresses the measuring instrument (12, 14; 80) through the network (15; 50) with the aid of an identification, preferably an IP address, a domain name, or an ID code.

17. Method according to Claim 15 or 16, wherein a network interface (13; 45; 60) is present, and the created program, before being automatically executed step-by-step, is written to an internal database of the network interface (13; 45; 60).

18. Method according to one of Claims 14 to 17, wherein measurement values which were determined during the automatic step-by-step execution are made available for further use.

19. Method according to one of Claims 14 to 18, wherein during the automatic step-by-step execution, a reporting or monitoring function runs on the measuring instrument (12, 14; 80) to transmit information to the computer (11).

20. Method according to one of Claims 14 to 19, wherein the measuring instrument (12, 14; 80) is a weighing cell.

21. Method according to Claim 20, wherein the weighing cell is a component of a balance or scale, a dryer, a comparator, or another instrument

22. Software (62) for use in a system (10) with at least one gravimetric measuring instrument (12, 14; 80), at least one data interface (13; 45; 60), and a computer (11), wherein the measuring instrument (12, 14; 80), for executing the software, is in communication connection with the computer (11) via the interface (13; 45; 60), and the software is designed to execute on the computer (11) the following steps:
- Support the representation of an input mask on a monitor which is connected to the computer (11);
- Support the creation of a program, preferably in the form of a script;
- Edit and/or save and/or load programs.

23. Software (62) according to Claim 22, wherein the data interface is designed as network interface (13; 45; 60), the system includes a network (15; 50), and the communication connection between the computer (11) and the measuring instrument (12, 14; 80) is via the network interface (13; 45; 60) and the network (15; 50).

24. Software (62) according to Claim 22 or 23, wherein one or more of the following steps can be executed:
- Start and/or stop a programmed procedure;
- Store and/or output captured data on the computer.

25. Software (62) according to Claim 22, 23, or 24, wherein it consists of an application or an applet.

26. Software (62) according to one of Claims 22 to 25, wherein the measuring instrument (12, 14; 80) is a weighing cell.

27. Software (62) according to Claim 26, wherein the weighing cell is a component of a balance or scale, a dryer, a comparator, or another instrument.

28. Software (62) according to one of claims 22 to 26, wherein in addition, one or more of the following steps can be executed:
- Transmission of determined measurement values from the measuring instrument (12, 14; 80) to a computer (11) or a peripheral device;
- Control of peripheral devices of the measuring instrument (12, 14; 80).

29. Data interface (13; 45; 60) in a system according to claim 1, in which a software (62, 72) according to Claim 22 is at least partially stored in the data interface.

30. Programmable gravimetric measuring instrument (12, 14; 80) in a system according to Claim 1, in which a software (62, 72) according to Claim 22 is completely or at least partially stored in the measuring instrument and/or a data interface (13; 45; 60) according to Claim 29.

## Revendications

1. Système (10) comprenant au moins un instrument de mesure (12, 14) par gravimétrie, au moins une interface de données (13 ; 45 ; 60) et un ordinateur (11) équipé d'un écran,
a) l'instrument de mesure (12, 14 ; 80) pouvant être relié à l'ordinateur (11) par l'interface de données (13 ; 45 ; 60) et une liaison de communication pouvant être établie entre l'instrument de mesure (12, 14 ; 80) et l'ordinateur (11),
b) une utilisation du système de navigation pouvant être mise en oeuvre sur l'ordinateur (11),
c) une utilisation d'instruction (62) entraînant la représentation d'un masque d'entrée (30) sur l'écran de l'ordinateur (11),
d) un déroulement de procédé pour l'utilisation automatisée de l'instrument de mesure (12, 14 ; 80) pouvant être défini par le masque d'entrée (30),
e) le déroulement du procédé pouvant être mis à disposition par l'ordinateur (11), et
f) le déroulement du procédé pouvant être réalisé par l'instrument de mesure (12, 14 ; 80).

2. Système (10) selon la revendication 1, comprenant un réseau (15 ; 50), l'interface de données étant conçue comme une interface de réseau (13 ; 45 ; 60),
a) l'instrument de mesure (12, 14 ; 80) pouvant être relié à l'ordinateur (11) par l'interface de réseau (13 ; 45 ; 60) et le réseau (15 ; 50) afin de mettre à disposition la liaison de communication entre l'instrument de mesure (12, 14 ; 80) et l'ordinateur (11),
b) l'utilisation d'instruction pouvant être mise à disposition par l'interface de réseau (13 ; 45 ; 60) ou par l'intermédiaire de l'interface de réseau (13 ; 45 ; 60), et
c) le déroulement du procédé pouvant être mis à disposition par l'ordinateur (11) par l'intermédiaire du réseau (15 ; 50) et de l'interface de réseau (13 ; 45 ; 60).

3. Système (10) selon la revendication 1 ou 2, un protocole de communication standard, de préférence un protocole basé sur IP, pouvant être utilisé pour la communication avec l'ordinateur (11).

4. Système (10) selon la revendication 1, 2 ou 3, l'utilisation d'instruction (62) étant conçue comme une application ou comme une applet.

5. Système (10) selon la revendication 2, l'interface de réseau (13 ; 45 ; 60) contenant une application web (61), afin de mettre à disposition l'utilisation d'instruction (62) sur demande par l'ordinateur (11).

6. Système (10) selon l'une quelconque des revendications précédentes, le déroulement du procédé définissant un déroulement de mesure qui peut être réalisé sur l'instrument de mesure (12, 14 ; 80).

7. Système (10) selon l'une quelconque des revendications précédentes, le déroulement du procédé pouvant être décrit par un langage de programmation auto-explicatif, de préférence dans une forme de script lisible pour l'utilisateur.

8. Système (10) selon l'une quelconque des revendications 1 à 7, plusieurs listes de sélection, qui contiennent des caractéristiques, des fonctions, des formats ou des données et/ou un champ d'entrée, dans lequel on peut définir directement des actions, étant mises à disposition pour la définition du déroulement du procédé dans le masque d'entrée (30).

9. Système (10) selon l'une quelconque des revendications précédentes, une application de contrôle (72), par laquelle la réalisation du déroulement du procédé peut être contrôlée par l'instrument de mesure (12, 14 ; 80), étant fournie dans l'instrument de mesure (12, 14 ; 80).

10. Système (10) selon la revendication 9, l'application de contrôle (72) permettant
- d'enregistrer des valeurs de mesure qui ont été déterminées par l'instrument de mesure (12, 14 ; 80) et/ou
- de transmettre des valeurs de mesure à l'ordinateur (11) et/ou
- de commander un appareil périphérique ou plusieurs appareils périphériques.

11. Système (10) selon l'une quelconque des revendications 2 à 10, l'utilisation d'instruction (62) permettant par l'intermédiaire du réseau (15 ; 50) un démarrage et/ou un arrêt du déroulement du procédé.

12. Système (10) selon l'une quelconque des revendications précédentes, moyennant quoi il s'agit d'une cellule de mesure en ce qui concerne l'instrument de mesure (12, 14 ; 80).

13. Système (10) selon la revendication 12, la cellule de mesure étant un composant d'une balance, d'un sécheur, d'un comparateur ou d'un autre instrument.

14. Procédé pour la définition et l'exécution d'un déroulement de procédé pour l'utilisation automatisée d'au moins un instrument de mesure (12, 14 ; 80) par gravimétrie, qui, pour la fixation du déroulement de procédé, est en liaison de communication avec un ordinateur (11) au moyen d'une interface de données (13 ; 45 ; 60), comprenant les étapes suivantes :
a) transmission d'une utilisation d'instruction (62) à l'ordinateur (11), l'utilisation d'instruction (62) étant spécifique à l'instrument de mesure,
b) représentation d'un masque d'entrée (30) sur l'ordinateur (11) avec le recours à l'utilisation d'instruction (62),
c) élaboration du déroulement du procédé au moyen de l'ordinateur (11) en fonction d'entrées qui sont actionnées par le masque d'entrée (30),
d) mise à disposition du déroulement du procédé élaboré par l'intermédiaire de l'interface de données (13 ; 45 ; 60),
e) élaboration automatique du déroulement du procédé élaboré dans l'instrument de mesure (12, 14 ; 80).

15. Procédé selon la revendication 14, la liaison de communication s'effectuant par un réseau (15 ; 50), et la transmission de l'utilisation d'instruction (62) à l'ordinateur (11) et la mise à disposition du déroulement du procédé élaboré s'effectuant par le réseau (15 ; 50).

16. Procédé selon la revendication 15, l'ordinateur (11) déclenchant l'instrument de mesure (12, 14 ; 80) avant l'exécution de l'étape a par l'intermédiaire du réseau (15 ; 50) avec le recours à une identification, de préférence une adresse IP, un nom de domaine, ou un code ID.

17. Procédé selon la revendication 15 ou 16, une interface de réseau (13 ; 45 ; 60) étant présente et le déroulement du procédé élaboré étant déposé avant l'exécution automatique dans une banque de données interne de l'interface de réseau (13 ; 45 ; 60).

18. Procédé selon l'une quelconque des revendications 14 à 17, les valeurs de mesure, qui ont été déterminées pendant l'exécution automatique, étant mises à disposition pour utilisation ultérieure.

19. Procédé selon l'une quelconque des revendications 14 à 18, une fonction de rapport ou de contrôle se déroulant sur l'instrument de mesure (12, 14 ; 80) pendant l'exécution automatique afin de transmettre de l'information à l'ordinateur (11).

20. Procédé selon l'une quelconque des revendications 14 à 19, moyennant quoi il s'agit d'une cellule de mesure en ce qui concerne l'instrument de mesure (12, 14 ; 80).

21. Procédé selon la revendication 20, la cellule de mesure étant un composant d'une balance, d'un sécheur, d'un comparateur ou d'un autre instrument.

22. Logiciel (62) pour une utilisation dans un système (10) comprenant au moins un instrument de mesure (12, 14 ; 80) par gravimétrie, au moins une interface de données (13 ; 45 ; 60) et un ordinateur (11), l'instrument de mesure (12, 14 ; 80) est, pour l'utilisation du logiciel, en liaison de communication avec l'ordinateur (11) par l'interface (13 ; 45 ; 60) et le logiciel étant conçu pour réaliser les étapes suivantes sur l'ordinateur (11) :
- assistance de la représentation d'un masque d'entrée sur un écran qui est raccordé à l'ordinateur (11) ;
- assistance de la production d'un déroulement de procédé, de préférence dans une forme de script ;
- édition et/ou mémorisation et/ou chargement du déroulement du procédé.

23. Logiciel (62) selon la revendication 22, l'interface de données étant conçue comme interface de réseau (13 ; 45 ; 60), le système comprenant un réseau (15 ; 50) et la liaison de communication entre l'ordinateur (11) et l'instrument de mesure (12, 14 ; 80) se déroulant au moyen de l'interface de réseau (13 ; 45 ; 60) et du réseau (15 ; 50).

24. Logiciel (62) selon la revendication 22 ou 23, une ou plusieurs des étapes suivantes pouvant être réalisée(s) :
- démarrage et/ou arrêt d'un déroulement de procédé programmé ;
- mémorisation et/ou édition de données des mesures obtenues sur l'ordinateur.

25. Logiciel (62) selon la revendication 22, 23 ou 24, moyennant quoi il s'agit d'une application ou d'une applet.

26. Logiciel (62) selon l'une quelconque des revendications 22 à 25, moyennant quoi il s'agit d'une cellule de mesure en ce qui concerne l'instrument de mesure (12, 14 ; 80).

27. Logiciel (62) selon la revendication 26, la cellule de mesure faisant partie d'une balance, d'un sécheur, d'un comparateur ou d'un autre instrument.

28. Logiciel (62) selon l'une quelconque des revendications 22 à 26, moyennant quoi en supplément une ou plusieurs des étapes suivantes peut (peuvent) être réalisée(s) :
- transmission de valeurs de mesure calculées de l'instrument de mesure (12, 14 ; 80) à un ordinateur (11) ou à un appareil périphérique ;
- commande d'appareils périphériques de l'instrument de mesure (12, 14 ; 80).

29. Interface de données (13 ; 45 ; 60) dans un système selon la revendication 1, un logiciel (62, 72) selon la revendication 22 étant déposé au moins partiellement dans l'interface de données.

30. Instrument de mesure par gravimétrie (12, 14 ; 80) programmable dans un système selon la revendication 1, un logiciel (62, 72) selon la revendication 22 étant déposé tout ou partiellement dans l'instrument de mesure et/ou dans une interface de données (13 ; 45 ; 60) selon la revendication 29.
